# EUROPEAN PATENT APPLICATION

(11) **EP 4 495 887 A1**
(43) Date of publication of application: **22.01.2025**
(21) Application number: 24188218.2
(22) Date of filing: 12.07.2024
(51) Int. Cl.: G06T 11/60

(54) **METHOD AND SYSTEM FOR GENERATING IMAGE USING CONTENT CODE**

(30) Priority: 18.07.2023 KR 20230093421
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); LEE, Seongjin, 06038 Seoul (KR)
(74) Representative: Studio Torta S.p.A.

(57) **Abstract**

Provided is a method for generating an image, which is performed by one or more processors and which includes receiving a first image, generating, using a content encoder, a first content code associated with the first image, generating, using a decoder, a second image based on the generated first content code, and outputting the generated second image.

## Description

### BACKGROUND

### TECHNICAL FIELD

The present disclosure relates to a method and a system for generating an image, and more specifically, to a method and a system for generating an image based on a generated content code.

### DESCRIPTION OF THE RELATED ART

AI-based image generation technology is a technology that generates new images based on inputs such as text, and is making innovative progress with the development of deep learning technology and generative models. The AI-based image generation technology is one of the research topics receiving a lot of attention in the field of computer vision and is being used in various applications such as style transfer, image reinforcement, image synthesis, etc.

However, the related image generation technology has a problem in that details of an image are not properly generated or existing structural information is changed and damaged. In addition, the related image generation technology has a problem in that the quality of the generated image is degraded due to a lack of information on the image to be generated or bias toward a specific dataset domain. This problems act as a factor that degrades the reliability of the generated image and limits usability in the application field.

### SUMMARY

In order to solve one or more problems (e.g., the problems described above and/or other problems not explicitly described herein), the present disclosure provides a method for, a non-transitory computer-readable recording medium storing instructions for, and a system (apparatus) for generating an image.

The present disclosure may be implemented in a variety of ways, including a method, a system (apparatus), or a computer program stored in a readable storage medium.

A method for generating an image may be performed by one or more processors and may include receiving a first image, generating, using a content encoder, a first content code associated with the first image, generating, using a decoder, a second image based on the generated first content code, and outputting the generated second image.

The first content code may represent structural information of objects in the first image.

The structural information of the objects in the second image and structural information of objects in the first image may be same, the first image may be the first domain style image, the second image may be the second domain style image, and the first domain style and the second domain style may be different from each other.

The first image may be an image of a virtual image style, and the second image may be an image of a real image style.

The content encoder may be an encoder of a generative adversarial network (GAN) model, and the decoder may be a decoder of a diffusion model.

A first neural network model may include the content encoder, a style encoder, a generator, a first discriminator, and a second discriminator, the generator may be configured to generate an image based on a content code and a style code, the first neural network model may be trained based on a plurality of first domain style training images and a plurality of second domain style training images, the first discriminator may be configured to determine whether a first domain style generated image generated by the generator is real or fake, and the second discriminator may be configured to determine whether a second domain style generated image generated by the generator is real or fake.

The style encoder may be configured to generate a style code associated with the image, and the style code associated with the image may represent the domain style of the image.

The decoder may not use the style code when generating the second image.

A second neural network model may include the decoder, and the second neural network model may be trained based on a plurality of second domain style training images and a plurality of content codes. The content encoder may be trained to generate a plurality of content codes based on the plurality of second domain style training images, and the decoder may be trained to generate a plurality of second domain style training images based on the plurality of content codes.

The first domain style training image may not be used when the second neural network model is trained.

The method may further include receiving the second image, and generating, by a content encoder, a second content code associated with the second image, in which the second image may be an image obtained by resizing the first image, and the generating the second image may include generating, using the decoder, the second image based on the first content code and the second content code.

A computer program is provided, which is stored on a computer-readable recording medium for executing the method described above according to the aspect on a computer.

An information processing system is provided, which may include a communication device, a memory, and one or more processors connected to the memory and configured to execute one or more computer-readable programs included in the memory, in which the one or more computer-readable programs may include instructions for receiving a first image, generating, using a content encoder, a first content code associated with the first image, generating, using a decoder, a second image based on the generated first content code.

According to various aspects of the present disclosure, individual information (e.g., content code, etc.) can be generated from the received image, and a new image of a different domain style including the same or similar content can be generated based on the generated individual information. Accordingly, a new image independent of the received image can be generated, and the quality of the generated image can be improved.

According to various aspects of the present disclosure, the content encoder may be included as a component of the first neural network model, and the first neural network model can be trained based on various domain style training images. Accordingly, the content encoder can be trained to generate an optimal content code required for generating an image desired by the user.

According to various aspects of the present disclosure, the decoder may be included as a component of the second neural network model, and the second neural network model may be trained based on a specific domain style training image and the content code. Accordingly, the decoder can be trained to generate, from the content code, an optimal image of a domain style desired by the user.

According to various aspects of the present disclosure, a plurality of content codes can be generated from each of the plurality of resized images, and an image can be generated based on the generated content codes. Accordingly, a high-quality image reflecting various content codes including low-level structural information as well as high-level structural information extracted from various sizes of the image can be generated.

The effects of the present disclosure are not limited to the effects described above, and other effects not described herein can be clearly understood by those of ordinary skill in the art (hereinafter referred to as "ordinary technician") from the description of the claims.

### BRIEF DESCRIPTION OF THE DRAWINGS

The above and other objects, features and advantages of the present disclosure will be described with reference to the accompanying drawings described below, where similar reference numerals indicate similar elements, but not limited thereto, in which:
FIG. 1 is a diagram illustrating an example of generating an output image based on an input image;
FIG. 2 is a schematic diagram illustrating a configuration in which an information processing system is communicatively connected to a plurality of user terminals to generate an image;
FIG. 3 is a block diagram of an internal configuration of the user terminal and the information processing system;
FIG. 4 is a diagram illustrating an example of training a first neural network model;
FIG. 5 is a diagram illustrating an example of training a second neural network model;
FIG. 6 is a diagram illustrating an example of an image generation system;
FIG. 7 is a diagram illustrating an example of generating an output image based on a plurality of input images;
FIG. 8 is a diagram illustrating an example of an artificial neural network; and
FIG. 9 is a flowchart provided to explain an example of a method for generating an image.

### DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "unit" used herein refers to a software or hardware component, and "module" or "unit" performs certain roles. However, the meaning of the "module" or "unit" is not limited to software or hardware. The "module" or "unit" may be configured to be in an addressable storage medium or configured to play one or more processors. Accordingly, as an example, the "module" or "unit" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "units" may be combined into a smaller number of components and "modules" or "units", or further divided into additional components and "modules" or "units."

The "module" or "unit" may be implemented as a processor and a memory. The "processor" should be interpreted broadly to encompass a general-purpose processor, a Central Processing Unit (CPU), a microprocessor, a Digital Signal Processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or marking data storage, registers, etc. The memory is said to be in electronic communication with a processor if the processor can read information from and/or write information to the memory. The memory integrated with the processor is in electronic communication with the processor.

In the present disclosure, a "system" may refer to at least one of a server apparatus and a cloud apparatus, but is not limited thereto. For example, the system may include one or more server apparatus. In another example, the system may include one or more cloud apparatus. In still another example, the system may include both the server apparatus and the cloud apparatus operated in conjunction with each other.

In the present disclosure, the "neural network model" may refer to a model including one or more artificial neural networks configured to include an input layer (layer), a plurality of hidden layers, and an output layer to infer an answer to a given input. Each layer may include a plurality of nodes. In addition, in the present disclosure, multiple artificial neural networks such as a first neural network model, a second neural network model, etc. are described as individual artificial neural networks, but aspects are not limited thereto, and some or all of the multiple artificial neural networks may be implemented as one artificial neural network.

In the present disclosure, a "Generative Adversarial Network (GAN) model" may refer to a machine learning model including a generator and a discriminator. The generator learns to generate synthetic data samples by using random noise as input and progressively improving the ability to generate realistic samples similar to training data. The discriminator acts as a binary classifier to learn how to distinguish between real and fake samples. The GAN model aims to train a generator that can generate high-quality samples indistinguishable from the real data by the discriminator through adversarial training processes.

In the present disclosure, a "diffusion model" may refer to a generative model that learns how to generate a high-quality sample by repeatedly applying a series of noise injection and diffusion processors to a given initial data sample. The encoder maps real data samples to a low-dimensional latent space, and the latent representation captures essential features of the data during the diffusion process. The latent representation passes through a decoder that generates synthetic data samples corresponding to the real data samples. By performing the diffusion step in reverse and using the encoder-decoder combination, the model may generate a real sample from random noise. This encoder-decoder framework allows conversion between different data representations, enabling tasks such as image-to-image conversion and data compression.

In the present disclosure, a "code" may refer to a list of numbers that include abstracted information on an image that can be decoded to a level similar to the original image. It may be divided into a content code and a style code depending on the information to be represented by the code. The content code may be a list of numbers representing structural information (e.g., category information, shape information, position information, etc.) of objects in an image. The style code may be a list of numbers representing a domain style of an image. The "domain style" of the image may herein refer to visual characteristics or artistic style of the image, and represent a unique combination of colors, textures, patterns, shapes, and other visual elements that define the overall shape and aesthetic quality of the image. For example, the domain style of the image may include a virtual image style such as computer graphics (e.g., computer game graphics) and a real image style such as a real world image captured with a camera.

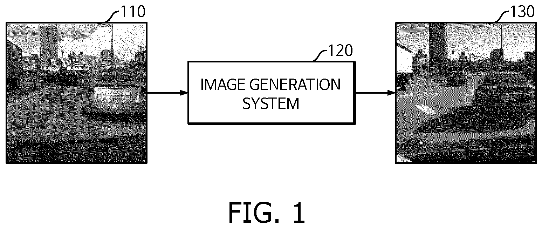

FIG. 1 is a diagram illustrating an example of generating an output image 130 based on an input image 110. As illustrated in FIG. 1, an image generation system 120 may be used for generating the output image 130. The image generation system 120 may be an artificial neural network model.

The image generation system 120 may receive the input image 110. The input image 110 may be a virtual image generated in a virtual environment. For example, the input image 110 may be a virtual image generated through a computer game or a computer simulation.

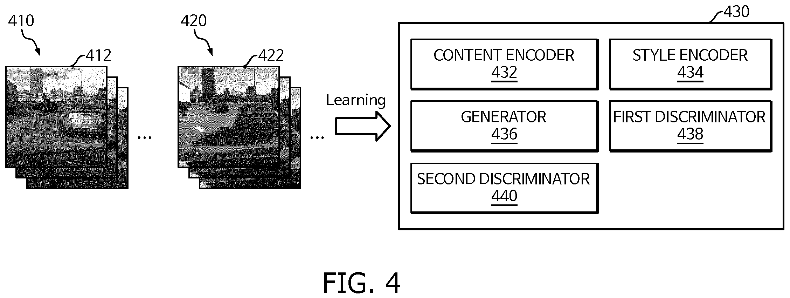

The image generation system 120 may generate a content code associated with the input image 110. To this end, the image generation system 120 may include a content encoder that generates a content code, which is structural information of objects in the input image, from the input image. The content encoder may be a component of the first neural network model and may be trained based on a plurality of first domain style training images and a plurality of second domain style training images. This will be described in detail elsewhere with reference to FIG. 4.

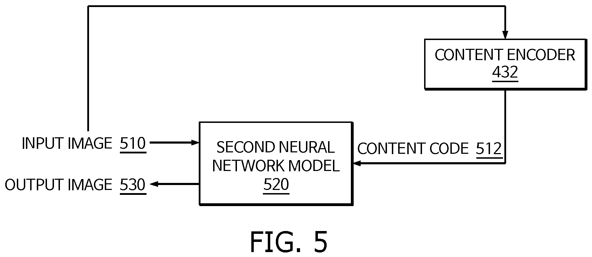

The image generation system 120 may generate the output image 130 based on the generated content code. The output image 130 may be a real image such as an image captured with a camera in a real environment. To this end, the image generation system 120 may include a decoder that generates an image based on a content code. The decoder may be a component of the second neural network model and may be trained to generate a specific domain style (e.g., real image style) image based on the content code. This will be described in detail elsewhere with reference to FIG. 5.

The structural information of the objects in the output image 130 may be the same as the structural information of the objects in the input image 110. For example, the building position, vehicle position, vehicle direction, road position, road direction, etc. in the output image 130 may be the same as the building position, vehicle position, vehicle direction, road position, road direction, etc. in the input image 110. On the other hand, the domain style of the output image 130 may be different from the domain style of the input image 110. For example, the domain style of the output image 130 may be a real image style, while the domain style of the input image 110 may be a virtual image style such as computer graphics. Meanwhile, the domain style of the input image 110 and/or the domain style of the output image 130 are not limited to the examples described above, and may include various types of domain styles (e.g., cartoon image style, dot drawing image style, etc.).

Referring to the configuration described above, the image generation system 120 may generate individual information (e.g., content code, etc.) from the input image 110, and based on the generated information, the image generation system 120 may generate a new output image 130 of a different domain style including the same or similar content. Accordingly, the image generation system 120 may generate the output image 130 independent of the input image 110 and improve the quality of the generated output image 130.

It is possible to generate virtual images almost limitlessly or generate virtual images of a desired scenario using a computer, and convert the generated virtual image into a real image using the image generation system 120. It is also possible to use the high-quality real images of required amount or required scenarios as the automotive autonomous driving training images. With this method, it is possible to solve the problem of difficulty in obtaining a sufficient amount of actual driving data required for automotive autonomous driving training in a short time at a low cost.

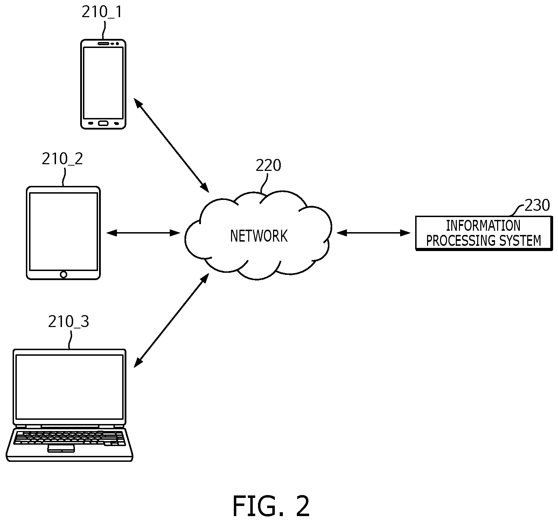

FIG. 2 is a schematic diagram illustrating a configuration in which an information processing system 230 is communicatively connected to a plurality of user terminals 210_1, 210_2, and 210_3 to generate an image. As illustrated, the plurality of user terminals 210_1, 210_2, and 210_3 may be connected through a network 220 to the information processing system 230 that is capable of generating an image. The plurality of user terminals 210_1, 210_2, and 210_3 may include a terminal of a user receiving the generated image.

The information processing system 230 may include one or more server apparatus and/or databases, or one or more distributed computing apparatus and/or distributed databases based on cloud computing services, which can store, provide and execute computer-executable programs (e.g., downloadable applications) and data associated with the image generation.

The image provided by the information processing system 230 may be provided to the user through an image generation application web browser, a web browser extension program, etc. installed in each of the plurality of user terminals 210_1, 210_2, and 210_3. For example, the information processing system 230 may provide corresponding information or perform corresponding process according to an image generation request received from the user terminals 210_1, 210_2, and 210_3 through an image generation application, etc.

The plurality of user terminals 210_1, 210_2, and 210_3 may communicate with the information processing system 230 through the network 220. The network 220 may be configured to enable communication between the plurality of user terminals 210_1, 210_2, and 210_3 and the information processing system 230. The network 220 may be configured as a wired network such as Ethernet, a wired home network (Power Line Communication), a telephone line communication device and RS-serial communication, a wireless network such as a mobile communication network, a wireless LAN (WLAN), Wi-Fi, Bluetooth, and ZigBee, or a combination thereof, depending on the installation environment. The method of communication may include a communication method using a communication network (e.g., mobile communication network, wired Internet, wireless Internet, broadcasting network, satellite network, etc.) that may be included in the network 220 as well as short-range wireless communication between the user terminals 210_1, 210_2, and 210_3, but aspects are not limited thereto.

In FIG. 2, a mobile phone terminal 210_1, a tablet terminal 210_2, and a PC terminal 210_3 are illustrated as the examples of the user terminals, but aspects are not limited thereto, and the user terminals 210_1, 210_2, and 210_3 may be any computing apparatus that is capable of wired and/or wireless communication and that can be installed with an image generation service application, the web browser, or the like and execute the same. For example, the user terminal may include an AI speaker, a smart phone, a mobile phone, a navigation, a computer, a notebook, a digital broadcasting terminal, a personal digital assistant (PDA), a portable multimedia player (PMP), a tablet PC, a game console, a wearable device, an internet of things (IoT) device, a virtual reality (VR) device, an augmented reality (AR) device, a set-top box, etc. In addition, FIG. 2 illustrates that three user terminals 210_1, 210_2, and 210_3 are in communication with the information processing system 230 through the network 220, but aspects are not limited thereto, and a different number of user terminals may be configured to be in communication with the information processing system 230 through the network 220.

FIG. 2 illustrates an example of a configuration in which the user terminals 210_1, 210_2, and 210_3 communicate with the information processing system 230 to receive the generated image, but aspects are not limited thereto, and a user's request or input may be provided to the information processing system 230 through an input device associated with the information processing system 230 without using the user terminals 210_1, 210_2, and 210_3, and a result of processing the user's request or input may be provided to the user through an output device (e.g., a display, etc.) associated with the information processing system 230.

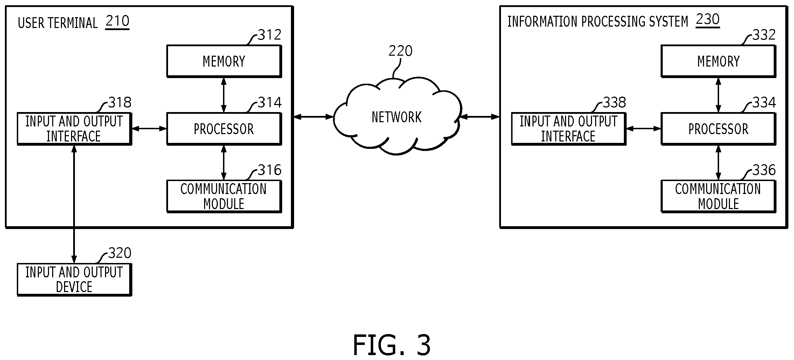

FIG. 3 is a block diagram of an internal configuration of the user terminal 210 and the information processing system 230. The user terminal 210 may refer to any computing apparatus that is capable of executing the application, web browsers, etc., and also capable of wired/wireless communication, and may include the mobile phone terminal 210_1, the tablet terminal 210_2, and the PC terminal 210_3 of FIG. 2, for example. As illustrated, the user terminal 210 may include a memory 312, a processor 314, a communication module 316, and an input and output interface 318. Likewise, the information processing system 230 may include a memory 332, a processor 334, a communication module 336, and an input and output interface 338. As illustrated in FIG. 3, the user terminal 210 and the information processing system 230 may be configured to communicate information, data, etc. through the network 220 using respective communication modules 316 and 336. In addition, an input and output device 320 may be configured to input information, data, etc. to the user terminal 210, or output information, data, etc. generated from the user terminal 210 through the input and output interface 318.

The memories 312 and 332 may include any non-transitory computer-readable recording medium. The memories 312 and 332 may include a permanent mass storage device such as read only memory (ROM), disk drive, solid state drive (SSD), flash memory, etc. As another example, a non-destructive mass storage device such as ROM, SSD, flash memory, disk drive, etc. may be included in the user terminal 210 or the information processing system 230 as a separate permanent storage device that is distinct from the memory. In addition, an operating system and at least one program code may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include a computer-readable recording medium such as a floppy drive, a disk, a tape, a DVD/CD-ROM drive, a memory card, etc., for example. As another example, the software components may be loaded into the memories 312 and 332 through the communication modules 316 and 336 rather than the computer-readable recording medium. For example, at least one program may be loaded into the memories 312 and 332 based on a computer program installed by files provided by developers or a file distribution system that distributes an installation file of an application through the network 220.

The processors 314 and 334 may be configured to process the instructions of the computer program by performing basic arithmetic, logic, and input and output operations. The instructions may be provided to the processors 314 and 334 from the memories 312 and 332 or the communication modules 316 and 336. For example, the processors 314 and 334 may be configured to execute the received instructions according to a program code stored in a recording device such as the memories 312 and 332.

The communication modules 316 and 336 may provide a configuration or function for the user terminal 210 and the information processing system 230 to communicate with each other through the network 220, and may provide a configuration or function for the user terminal 210, the information processing system 230, etc. to communicate with another user terminal or another system (e.g., a separate cloud system, etc.). For example, a request or data (e.g., a request to generate an image, etc.) generated by the processor 314 of the user terminal 210 according to the program code stored in the recording device such as the memory 312 may be transmitted to the information processing system 230 through the network 220 under the control of the communication module 316. Conversely, a control signal or command provided under the control of the processor 334 of the information processing system 230 may be sent through the communication module 336 and the network 220 and received by the user terminal 210 through the communication module 316 of the user terminal 210.

The input and output interface 318 may be a means for interfacing with the input and output device 320. As an example, the input device may include a device such as a camera including an audio sensor and/or an image sensor, a keyboard, a microphone, a mouse, etc., and the output device may include a device such as a display, a speaker, a haptic feedback device, etc. As another example, the input and output interface 318 may be a means for interfacing with a device such as a touch screen, etc. that incorporates a configuration or function for performing inputting and outputting. For example, when the processor 314 of the user terminal 210 processes the instructions of the computer program loaded into the memory 312, a service screen, etc., which is configured with the information, data, etc. provided by the information processing system 230 or another user terminals, may be displayed on the display through the input and output interface 318. While FIG. 3 illustrates that the input and output device 320 is not included in the user terminal 210, aspects are not limited thereto, and an input and output device may be configured as one device with the user terminal 210. In addition, the input and output interface 338 of the information processing system 230 may be a means for interfacing with a device (not illustrated) for inputting or outputting, which may be connected to or included in the information processing system 230. While FIG. 3 illustrates the input and output interfaces 318 and 338 as the components configured separately from the processors 314 and 334, aspects are not limited thereto, and the input and output interfaces 318 and 338 may be configured to be included in the processors 314 and 334.

The user terminal 210 and the information processing system 230 may include more components than those illustrated in FIG. 3. Meanwhile, most of the related components may not necessarily require exact illustration. The user terminal 210 may be implemented to include at least a part of the input and output device 320 described above. In addition, the user terminal 210 may further include another component such as a transceiver, a global positioning system (GPS) module, a camera, various sensors, a database, etc.

While a program for the image generation application, etc. is being operated, the processor 314 may be configured to receive text, image, video, audio, and/or action, etc. inputted or selected through the input device such as a camera, a microphone, and so on, that includes a touch screen, a keyboard, an audio sensor and/or an image sensor connected to the input and output interface 318, and store the received text, image, video, audio, and/or action, etc. in the memory 312, or provide the same to the information processing system 230 through the communication module 316 and the network 220.

The processor 314 of the user terminal 210 may be configured to manage, process and/or store the information, data, etc. received from the input and output device 320, another user terminal, the information processing system 230, a plurality of external systems, etc. The information, data, etc. processed by the processor 314 may be provided to the information processing system 230 through the communication module 316 and the network 220. The processor 314 of the user terminal 210 may send the information, data, etc. to the input and output device 320 through the input and output interface 318 to output the same. For example, the processor 314 may output or display the received information and/or data on the screen of the user terminal 210.

The processor 334 of the information processing system 230 may be configured to manage, process, and/or store information, data, etc. received from a plurality of user terminals 210, a plurality of external systems, etc. The information, data, etc. processed by the processor 334 may be provided to the user terminals 210 through the communication module 336 and the network 220.

FIG. 4 is a diagram illustrating an example of training a first neural network model 430. The image generation system may include a content encoder that extracts and generates a content code from the received image, and the first neural network model 430 may be used to train the content encoder of the image generation system. The content code may be a list of numbers representing structural information (e.g., category information, shape information, position information, etc.) of the objects in the image.

The first neural network model 430 may include a content encoder 432. The content encoder 432 may be trained with other configurations 434, 436, 438, and 440 of the first neural network model 430. The first neural network model 430 may be a GAN model, and the content encoder 432 may be an encoder of the GAN model. The content encoder 432 trained using the first neural network model 430 may be used later in the image generation system to extract and generate a content code from the image.

The first neural network model 430 may further include a style encoder 434, a generator 436, a first discriminator 438, and a second discriminator 440. The style encoder 434 may be configured and trained to extract and generate a style code from the image. The generator 436 may be configured and trained to generate an image using a content code generated and extracted from the content encoder 432 and a style code generated and extracted from the style encoder 434. That is, the trained generator 436 may generate a domain style image according to a style code that includes the structural information of the objects according to the content code.

The discriminators 438 and 440 may be configured and trained to determine the authenticity of the image. For example, the discriminators 438 and 440 may determine whether an input image is an image generated by the generator 4366. The first discriminator 438 may determine whether the first domain style (e.g., virtual style) image is real or fake. That is, if the received image is determined to be a first domain style image not generated by the generator 436, the first discriminator 438 may determine the received image to be real, and if the received image is determined to be the first domain style image generated by the generator 436, the first discriminator 438 may determine the received image to be fake. The second discriminator 440 may determine whether a second domain style (e.g., real style) image is real or fake. That is, if the received image is determined to be the second domain style image not generated by the generator 436, the second discriminator 440 may determine the received image to be real, and if the received image is determined to be the second domain style image generated by the generator 436, the second discriminator 440 may determine the received image to be fake. In the training process, the generator 436 and the first and second discriminators 438 and 440 may be trained adversarially.

The first neural network model 430 may receive a plurality of images for training. Specifically, the first neural network model 430 may receive a plurality of first domain style training images 410 and a plurality of second domain style training images 420 for training. In this case, the plurality of first domain style training images 410 may be virtual images generated in a virtual environment (e.g., 3D games, simulations, metaverse, etc.), and the plurality of second domain style training images 420 may be real images, that is, actually captured images. Alternatively, different styles of training images (e.g., cartoon rendered training images, etc.) may be used, rather than virtual and real images.

The content encoder 432 may extract and generate content codes from a pair of first domain style training image 412 and second domain style training image 422. The first domain style training image 412 and the second domain style training image 422 may be any pair of the images included in the plurality of first domain style training images 410 and the plurality of second domain style training images 420. For example, the content encoder 432 may extract and generate a first content code in which structural information such as the position and direction of an object (e.g., a person, an animal, an object, etc.) included in the first domain style training image 412 is listed in numbers. Likewise, the content encoder 432 may extract and generate a second content code in which structural information such as the position and direction of an object (e.g., a person, an animal, an object, etc.) included in the second domain style training image 422 is listed in numbers.

The style encoder 434 may extract and generate a style code from the first domain style training image 412 and the second domain style training image 422 received for training. For example, the style encoder 434 may extract and generate a first style code (i.e., first domain style information) in which the domain style (i.e., first domain style) of the first domain style training image 412 is listed in numbers. Likewise, the style encoder 434 may extract and generate a second style code (i.e., second domain style information) in which the domain style (i.e., second domain style) of the second domain style training image 422 is listed in numbers.

The generator 436 may generate an image based on the content code and the style code. For example, the generator 436 may generate a first generated image based on the first content code (the structural information of the first domain style training image 412) and the second style code (the second domain style information) described above. The first generated image may be an image that represents the structural information included in the first domain style training image 412 in the domain style of the second domain style training image 422. Accordingly, the first generated image may be an image of the second domain style (real image style). The second discriminator 440 may determine the authenticity of the first generated image. The second discriminator 440 may be trained to determine the first generated image to be fake.

Likewise, the generator 436 may generate a second generated image based on the second content code (the structural information of the second domain style training image 422) and the first style code (the first domain style information) described above. The second generated image may be an image that represents the structural information included in the second domain style training image 422 in the domain style of the first domain style training image 412. Accordingly, the second generated image may be an image of the first domain style (virtual image style). The first discriminator 438 may determine the authenticity of the second generated image. The first discriminator 438 may be trained to determine the second generated image to be fake.

The content encoder 432 may extract a third content code (same as or similar to the structural information of the first domain style training image 412) from the first generated image, and a fourth content code (same as or similar to the structural information of the second domain style training image 422) from the second generated image. In addition, the style encoder 434 may extract a third style code (same as or similar to the second domain style information) from the first generated image and a fourth style code (same as or similar to the first domain style information) from the second generated image. The generator 436 may generate a third generated image based on the third content code (same as or similar to the structural information of the first domain style training image 412) and the fourth style code (same as or similar to the first domain style information). Because it is intended to generate the third generated image of the first domain style image that includes the same or similar information as the structural information of the first domain style training image 412, the encoders 432 and 436 and the generator 436 may be trained so that the third generated image is generated to be the same as or similar to the first domain style training image 412. Likewise, the generator 436 may generate a fourth generated image based on the fourth content code (same as or similar to the structural information of the second domain style training image 422) and the third style code (same as or similar to the second domain style information). Because it is intended to generate the fourth generated image of the second domain style image that includes the same or similar information as the structural information of the second domain style training image 422, the encoders 432 and 436 and the generator 436 may be trained so that the fourth generated image is generated to be the same as or similar to the second domain style training image 422.

The content encoder 432, the style encoder 434, the generator 436, the first discriminator 438, and the second discriminator 440 in the first neural network model 430 may be trained by repeating the processes described above for a plurality of pairs of the first domain style training images and the second domain style training images.

As described above, the content encoder 432 may be included as a component of the first neural network model 430, and the first neural network model 430 may be trained based on various domain style training images. Accordingly, the content encoder 432 may be trained to generate an optimal content code required for generating an image desired by the user.

In FIG. 4, each of the component of the first neural network model 430 represents functional elements that are divided on the basis of functions, and a plurality of components may be implemented in an integrated form in an actual physical environment. Alternatively, the components of the first neural network model 430 may be implemented separately from each other in the actual physical environment.

In addition, in FIG. 4, the internal configuration of the first neural network model 430 is implemented separately as the content encoder 432, the style encoder 434, the generator 436, the first discriminator 438, and the second discriminator 440, but aspects are not limited thereto, and some configurations may be omitted, other configurations may be added, or some configurations may be merged.

FIG. 5 is a diagram illustrating an example of training a second neural network model 520. The image generation system may include a decoder that generates an image based on the content code, and the second neural network model 520 may be used to train the decoder of the image generation system. In this case, the second neural network model may be a diffusion model, and the decoder may be a decoder of the diffusion model.

The content encoder 432 may extract and generate a content code 512 from an input image 510 to train the second neural network model 520. In this case, the content encoder 432 may be a content encoder trained by the process described above in FIG. 4. The input image 510 may be one of a plurality of real training images. The second neural network model 520 may receive the input image 510 as input, and receive the content code 512 as a condition to generate an output image 530.

The second neural network model 520 may be trained to minimize the loss calculated by comparing the input image 510 with the output image 530. The second neural network model 520 may be trained by repeating the process described above based on a plurality of input images 510 and a plurality of output images 530, and likewise, the decoder of the second neural network model 520 may also be trained through the process described above. In addition, in this process, the input image 510 used for training may be the second domain style image (e.g., real image style, etc.) of FIG. 4, and the first domain style image may not be used.

As described above, the decoder may be included as a component of the second neural network model 520, and the second neural network model 520 may be trained based on a specific domain style training image (e.g., real training image, etc.) and a content code. Accordingly, the decoder may be trained to generate, from the content code, an image of a specific domain style desired by the user.

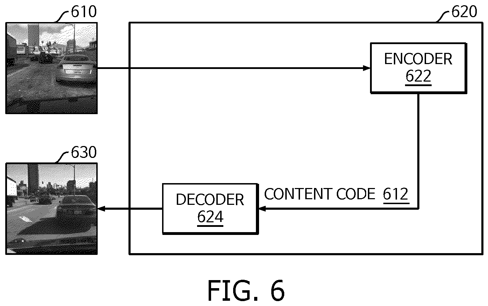

FIG. 6 is a diagram illustrating an example of an image generation system 620. As illustrated in FIG. 6, the image generation system 620 may be a third neural network model including an encoder 622 and a decoder 624. The encoder 622 may be the content encoder 432 of the first neural network model 430 trained through the process described above in FIG. 4. The decoder 624 may be the decoder of the second neural network model 520 trained through the process described above in FIG. 5. That is, the decoder 624 may be a decoder trained to generate an image of a specific domain style (e.g., real image style) based on the content code.

The image generation system 620 may receive an input image 610. The encoder 622 of the image generation system 620 may generate a content code 612 from the input image 610. The decoder 624 of the image generation system 620 may generate an output image 630 based on the content code 612. In this process, the decoder 624 may generate the output image 630 without using the style code, that is, using only the content code 612.

The structural information of the objects in the output image 630 may be the same as the structural information of the objects in the input image 610. For example, the building position, the vehicle position, the vehicle direction, etc. in the output image 630 may be the same as the building position, the vehicle position, the vehicle direction, etc. in the input image 610.

On the other hand, the domain style of the output image 630 may be different from the domain style of the input image 610. For example, the domain style of the input image 610 may be a virtual image style such as computer graphics, and the domain style of the output image 630 may be a real image style. Alternatively, the domain style of the input image 610 may be a real image style, and the domain style of the output image 630 may be a virtual image style. Meanwhile, the domain style of the input image 110 and/or the domain style of the output image 130 are not limited to the examples described above, and may include various types of domain styles (e.g., cartoon rendered image style, etc.).

As described above, the image generation system 620 may include the encoder 622 and the decoder 624 to generate individual information (e.g., content code) from the input image 610 and generate the new output image 630 based on the same. Accordingly, the image generation system 620 may include the same or similar structural information as the input image 610, and may also generate the high-quality output image 630 of a different domain style.

Each of the components of the image generation system 620 illustrated in FIG. 6 represent functional components that can be divided on the basis of functions, and a plurality of components may be implemented in an integrated form in an actual physical environment. Alternatively, the components of the image generation system 620 may be implemented separately from each other in the actual physical environment.

In addition, in FIG. 6, the internal configuration of the image generation system 620 is implemented separately as the encoder 622 and the decoder 624, but aspects are not limited thereto, and some configurations may be omitted, other configurations may be added, or some configurations may be merged.

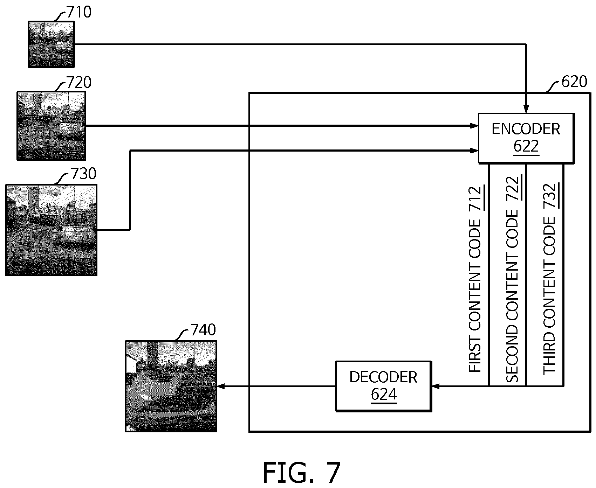

FIG. 7 is a diagram illustrating an example of generating an output image 740 based on a plurality of input images 710, 720, and 730. The plurality of input images 710, 720, and 730 may be images of different sizes for the same content. For example, the second input image 720 and the third input image 730 may be images obtained by resizing the first input image 710 to different sizes.

The image generation system 620 may receive the first input image 710, the second input image 720, and the third input image 730. The encoder 622 of the image generation system 620 may generate a first content code 712, a second content code 722, and a third content code 732 from each of the first input image 710, the second input image 720, and the third input image 730. The decoder 624 of the image generation system 620 may generate the output image 740 based on the first content code 712, the second content code 722, and the third content code 732.

FIG. 7 illustrates that the image generation system 620 generates the output image 740 based on three input images 710, 720, and 730, but aspects are not limited thereto, and it may be configured to generate an output image based on a different number of input images.

As described above, the image generation system 620 may generate a plurality of content codes 712, 722, and 730 from each of the plurality of resized input images 710, 720, and 730, and generate the output image 740 based on the generated content codes. Accordingly, a high-quality image reflecting various content codes including low-level structural information as well as high-level structural information extracted from various sizes of the image may be generated.

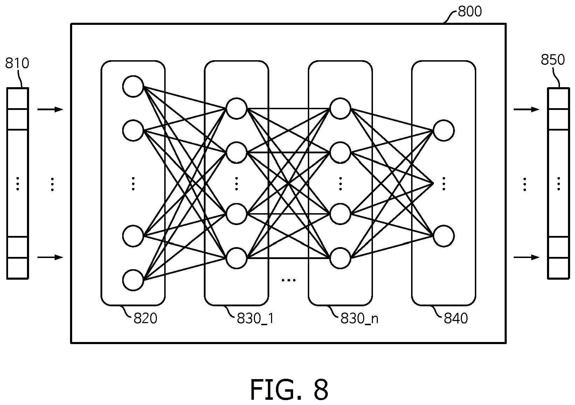

FIG. 8 is a diagram illustrating an example of an artificial neural network 800. In machine learning technology and cognitive science, the artificial neural network 800 as an example of the machine learning model refers to a statistical learning algorithm implemented based on a structure of a biological neural network, or to a structure that executes such algorithm.

The artificial neural network 800 may represent a machine learning model that acquires a problem solving ability by repeatedly adjusting the weights of synapses by the nodes that are artificial neurons forming the network through synaptic combinations as in the biological neural networks, thus training to reduce errors between a target output corresponding to a specific input and a deduced output. For example, the artificial neural network 800 may include any probability model, neural network model, etc., that is used in artificial intelligence learning methods such as machine learning and deep learning.

The artificial neural network 800 is implemented as a multilayer perceptron (MLP) formed of multilayer nodes and connections therebetween. The artificial neural network 800 may be implemented using one of various artificial neural network model structures including MLP. As illustrated in FIG. 8, the artificial neural network 800 includes an input layer 820 to receive an input signal or data 810 from the outside, an output layer 840 to output an output signal or data 850 corresponding to the input data, and (n) number of hidden layers 830_1 to 830_n (where n is a positive integer) positioned between the input layer 820 and the output layer 840 to receive a signal from the input layer 820, extract the features, and transmit the features to the output layer 840. In an example, the output layer 840 receives signals from the hidden layers 830_1 to 830_n and outputs the signals to the outside.

The training method of the artificial neural network 800 includes a supervised learning that trains for optimization for solving a problem with inputs of teacher signals (correct answer), and an unsupervised learning that does not require a teacher signal. A computing device (e.g., an information processing system, etc.) may train the artificial neural network 800 using training data including a plurality of virtual training images and a plurality of real training images for the first neural network model. In addition, the computing device may train the artificial neural network 800 using training data including a plurality of second domain style training images and a plurality of content codes for the second neural network model.

An input variable of the artificial neural network 800 in the first neural network model may include a content code and a style code. If the input variable described above is input through the input layer 820, an output variable output from the output layer 840 of the artificial neural network 800 may be the generated image. In addition, the input variable of the artificial neural network 800 in the first neural network model may include the generated image. If the input variable described above is input through the input layer 820, the output variable output from the output layer 840 of the artificial neural network 800 may be a result of determining the authenticity of the generated image.

The input variable of the artificial neural network 800 in the second neural network model may include a first input image and a content code. If the input variable described above is input through the input layer 820, the output variable output from the output layer 840 of the artificial neural network 800 may be the generated first output image.

The input variable of the artificial neural network 800 in the third neural network model may include the second input image. If the input variable described above is input through the input layer 820, the output variable output from the output layer 840 of the artificial neural network 800 may be the generated second output image.

As described above, the input layer 820 and the output layer 840 of the artificial neural network 800 are respectively matched with a plurality of output variables corresponding to a plurality of input variables, and as the synaptic values between nodes included in the input layer 820, and the hidden layers 830_1 to 830_n, and the output layer 840 are adjusted, training can be processed to extract a correct output corresponding to a specific input. Through this training process, the features hidden in the input variables of the artificial neural network 800 can be confirmed, and the synaptic values (or weights) between the nodes of the artificial neural network 800 can be adjusted so that there can be a reduced error between the target output and the output variable calculated based on the input variable.

The computing device may train the content encoder, the style encoder, and/or the generator of the first neural network model to minimize a loss between the virtual training image, which is ground truth, and the image output from the generator of the first neural network model. In addition, the computing device may train the content encoder, the style encoder, and/or the generator of the first neural network model to minimize the loss between the real training image, which is ground truth, and the image output from the first neural network model, that is, the image output from the generator of the first neural network model.

The computing device may train two discriminators of the first neural network model to minimize the loss between the authenticity of the training image, which is ground truth, and the result of determining the authenticity of the training image output from the discriminator of the first neural network model.

In another aspect, the computing device may train the second neural network model to minimize the loss between the first input image and the first output image output from the second neural network model.

The third neural network model may be configured using the content encoder of the first neural network model and the decoder of the second neural network model trained through the process described above.

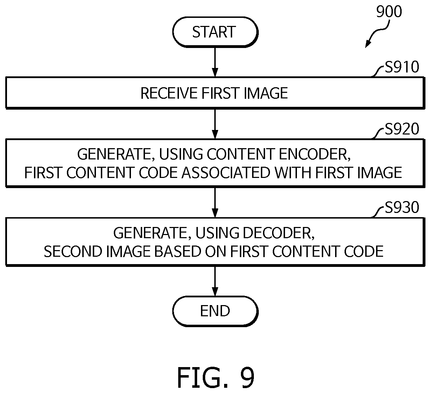

FIG. 9 is a flowchart provided to explain an example of a method 900 for generating an image. The method 900 may be performed by at least one processor (e.g., the processor 334 of the information processing system 230, etc.). The method 900 may be initiated by receiving a first image, at S910. The processor may generate, using the content encoder, a first content code associated with the first image, at S920. In this case, the first content code may represent the structural information of the objects in the first image. In addition, the content encoder may be an encoder of a generative adversarial network (GAN) model.

The first neural network model may include the content encoder, the style encoder, the generator, and the first discriminator, and the first neural network model may be trained based on a plurality of first domain style training images and a plurality of second domain style training images. The first discriminator may be configured to determine whether a first domain style generated image generated by the generator is real or fake, and the second discriminator may be configured to determine whether a second domain style generated image generated by the generator is real or fake.

The style encoder is configured to generate a style code associated with the image, and the style code represents the domain style of the image. In addition, the decoder may not use the style code when generating the second image.

The processor may generate, using the decoder, a second image based on the first content code, at S930. The decoder may be a decoder of a diffusion model. The structural information of the objects in the second image may be the same as the structural information of the objects in the first image, the first image may be the first domain style image, the second image may be the second domain style image, and the first domain style and the second domain style may be different from each other. In addition, the first image may be an image of a virtual image style, and the second image may be an image of a real image style.

The second neural network model may include the decoder described above, and the second neural network model may be trained based on a plurality of second domain style training images and a plurality of content codes. The content encoder may be trained to generate a plurality of content codes based on the plurality of second domain style training images, and the decoder may be trained to generate a plurality of second domain style training images based on the plurality of content codes. In addition, the first domain style training images may not be used for the training of the second neural network model.

The processor may receive the second image and generate, using the content encoder, a second content code associated with the second image. The second image may be an image obtained by resizing the first image, and the processor may generate, using the decoder, the second image based on the first content code and the second content code.

The processor may output the generated second image on the display or to another device. For example, the generated second image may be displayed on a graphical user interface.

The flowchart illustrated in FIG. 9 and the above description are merely examples, and may be implemented differently in some other examples. For example, according to some aspects, the order of steps may be changed, some steps may be repeatedly performed, some steps may be omitted, or some steps may be added.

The method described above may be provided as a computer program stored in a computer-readable recording medium for execution on a computer. The medium may be a type of medium that continuously stores a program executable by a computer, or temporarily stores the program for execution or download. In addition, the medium may be a variety of writing means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies according to design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The commands may be executable by one or more processors, and may cause the processor(s) to perform certain aspects of the functions described in the present disclosure.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or apparatus, and storage may be similarly influenced across a plurality of apparatus. Such apparatus may include PCs, network servers, and portable apparatus.

Although the present disclosure has been described in connection with some aspects herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method, for generating an image, performed by one or more processors, the method comprising:
receiving a first image;
generating, using a content encoder, a first content code associated with the first image;
generating, using a decoder, a second image based on the generated first content code; and
outputting the generated second image.

2. The method according to claim 1, wherein the first content code represents structural information of objects in the first image.

3. The method according to claim 1, wherein:
structural information of objects in the second image and structural information of objects in the first image are same,
the first image is an image of a first domain style,
the second image is an image of a second domain style, and
the first domain style and the second domain style are different from each other.

4. The method according to claim 3, wherein the first image is an image of a virtual image style, and
wherein the second image is an image of a real image style.

5. The method according to claim 1, wherein the content encoder is an encoder of a generative adversarial network (GAN) model, and
wherein the decoder is a decoder of a diffusion model.

6. The method according to claim 1, wherein a first neural network model comprises the content encoder, a style encoder, a generator, a first discriminator, and a second discriminator,
wherein the generator is configured to generate an image based on a content code and a style code,
wherein the first neural network model is trained based on a plurality of first domain style training images and a plurality of second domain style training images,
wherein the first discriminator is configured to determine whether a first domain style generated image generated by the generator is real or fake, and
wherein the second discriminator is configured to determine whether a second domain style generated image generated by the generator is real or fake.

7. The method according to claim 6, wherein the style encoder is configured to generate a style code associated with an image, and
wherein the style code associated with the image represents a domain style of the image.

8. The method according to claim 7, wherein the decoder does not use a style code when generating the second image.

9. The method according to claim 1, wherein a second neural network model comprises the decoder,
wherein the second neural network model is trained based on a plurality of second domain style training images and a plurality of content codes,
wherein the content encoder generates the plurality of content codes based on the plurality of second domain style training images, and
wherein the decoder is trained to generate the plurality of second domain style training images based on the plurality of content codes.

10. The method according to claim 9, wherein a first domain style training image is not used when the second neural network model is trained.

11. The method according to claim 1, further comprising:
receiving the second image; and
generating, using the content encoder, a second content code associated with the second image,
wherein the second image is an image obtained by resizing the first image, and
wherein the generating the second image comprises generating, using the decoder, the second image based on the first content code and the second content code.

12. A non-transitory computer-readable recording medium storing instructions, when executed, cause performance of the method according to claim 1.

13. An information processing system, comprising:
a communication device;
a memory; and
one or more processors connected to the memory and configured to execute one or more computer-readable programs included in the memory,
wherein the one or more computer-readable programs comprises instructions for:
receiving a first image,
generating, using a content encoder, a first content code associated with the first image,
generating, using a decoder, a second image based on the generated first content code, and
outputting the generated second image.
